# FASCICULE DE BREVET EUROPEEN

(11) **EP 0 507 669 B1**
(45) Date de publication et mention de la délivrance du brevet: **12.06.1996**
(21) Numéro de dépôt: 92400894.9
(22) Date de dépôt: 31.03.1992
(51) Int. Cl.: G07F 7/08, G06K 19/07

(54) **Procédé de paiement électronique par carte à puce à l'aide de jetons numérotés et carte pour sa mise en oeuvre**
Verfahren zum elektronischen Bezahlen per Chipkarte mit Hilfe von numerierten Wertmarken und Karte zur Durchführung
Method for electronic payment with an IC-card provided with numbered tokens; and card to implement this method

(30) Priorité: 03.04.1991 FR 9104035
(43) Date de publication de la demande: 07.10.1992
(73) Titulaire: FRANCE TELECOM, F-75015 Paris (FR); Etablissement Public de Télédiffusion dit "Télédiffusion de France", F-92542 Montrouge Cédex (FR); Philips Electronics N.V., 5621 BA Eindhoven (NL)
(72) Inventeur: Guillou, Louis, F-35230 Bourgbarre (FR); Quisquater, Jean-Jacques, B-1348 Louvain-la-Neuve (BE)
(74) Mandataire: Signore, Robert

(56) Documents cités:
- EP-A- 0 010 496
- WO-A-85/03787

## Description

La présente invention a pour objet un procédé de paiement électronique par carte à puce à l'aide de jetons numérotés et une carte pour la mise en oeuvre de ce procédé.

On sait qu'aujourd'hui, plusieurs types de cartes à puce sont couramment utilisées pour payer des biens ou des services. Par exemple, en France, les télécartes et les cartes PASTEL (marque déposée) sont utilisées sur les publiphones ; les cartes bancaires sont utilisées chez les commerçants et les cartes PC2 sont utilisées sur les terminaux VISIOPASS (marque déposée) de télévision à péage.

Sur les publiphones, la consommation des unités de taxe dans les télécartes est locale et anonyme. Des statistiques donnent une idée du trafic écoulé par cabine. Le relevé d'opération se réduit au nombre d'unités consommées et au numéro appelé. Mais, à raison d'un bit par unité consommée, on ne peut pas réaliser un audit des relevés afin de détecter d'éventuelles fausses télécartes. On ne sait pas distinguer un bit "authentique" d'un bit "frauduleux".

La fraude est combattue par diverses mesures physiques telles que la recherche de fils suspects dans la télécarte ou la vérification de gabarits de signaux électroniques. Si l'anonymat est bien assuré, la détection rudimentaire de fausses télécartes dépend de la sécurité physique des publiphones.

Chez les commerçants, un certificat est calculé à chaque opération avec une carte bancaire à puce. Chaque paiement entraîne un relevé d'opération, puis la transmission des paramètres correspondants (une facturette électronique de plusieurs centaines de bits) vers la banque du commerçant pour une opération ultérieure de compensation avec la banque du client. La sécurité est élevée, mais il n'y a pas d'anonymat.

Pour l'accès conditionnel, des cartes porte-clés sont utilisées. Suivant les versions de porte-clés, les services s'obtiennent à l'abonnement, à la séance ou à la durée. La carte PC0 sert à un service boursier diffusé par le procédé ANTIOPE. La carte PC1 sert à un contrôle d'accès à TRANSPAC. La carte PC2 sert au programme VISIOPASS (marque déposée) développé par FRANCE TELECOM. L'authentification de la carte et la gestion des titres d'accès sont très perfectionnées. Mais la taxation à la durée, disponible aujourd'hui uniquement sur PC1 et bientôt sur une nouvelle version de PC2, n'utilise pour le moment qu'un seul bit par jeton.

On peut souligner également l'utilisation de cartes bancaires sur les publiphones : un seul bit est consommé à chaque unité de taxe. Alors que la consommation d'unités reste anonyme, l'achat de chaque bloc de 120 jetons donne lieu à une facturation personnalisée, via le réseau bancaire.

Beaucoup de services se paient par des jetons, des tickets, de la monnaie ou par leur contre-partie électronique. Les contre-parties électroniques dans une carte à puce intéressent beaucoup les opérateurs de transports : autoroute, métro, train, bus, tram, taxi, parking. Mais il y en a bien d'autres : le téléphone, le radiotéléphone et les services télématiques par exemple.

Le problème général posé par ces techniques revient à trouver un procédé de gestion de jetons, économiquement viable, permettant à la fois l'anonymat du paiement et la détection des fraudes.

Lorsqu'il s'agit de taxation à la durée, quand un seul bit est consommé à chaque unité de taxe, on ne sait pas qualifier les jetons pour détecter et diagnostiquer les fraudes par un audit des relevés d'opération ; on ne sait pas non plus résoudre les conflits entre différents opérateurs de services puisant dans un stock commun de jetons.

La présente invention a justement pour but de remédier à cette carence en proposant un procédé dans lequel on utilise plusieurs bits pour chaque unité de taxe. En d'autres termes, on numérote les jetons afin de pouvoir vérifier leur authenticité.

Cette solution satisfait les diverses contraintes évoquées ci-dessus : anonymat, viabilité, résistance à la fraude.

Le procédé de l'invention peut être implanté dans toute carte à puce, y compris de nouvelles versions des masques PC1, PC2, MP ou TB100, à condition de prévoir une adaptation permettant la mémorisation et le traitement de jetons qui sont composés de plusieurs bits.

Le document WO-A-85 03787 décrit un procédé et un système de transactions dans lequel on engendre une liste de nombres aléatoires qui correspondent à des numéros de transactions ; on mémorise cette liste de nombres aléatoires à la fois dans un processeur central et dans une unité portative ; pour une transaction ayant un rang déterminé, on engendre un code de sécurité en combinant un paramètre de la transaction avec le nombre aléatoire correspondant au rang de cette transaction. Ce code de sécurité est vérifié pendant la transaction.

Ce document ne suggère pas la constitution de tickets numérotés, lesquels sont débités en fonction du montant de la transaction par révélation au prestataire de service puis contrôlés à la liasse initialement constituée dans l'entité émettrice. Dans le document antérieur, on ne consomme pas une pluralité de nombres aléatoires selon le montant de la transaction, mais on utilise un et un seul de ces nombres pour constituer un code de sécurité, quel que soit le montant de la transaction.

Avant d'exposer en détail les caractéristiques et avantages de l'invention, il n'est pas inutile d'effectuer un bref rappel sur les cartes à puce. Pour ce faire, on distinguera les télécartes, les cartes bancaires et les nouveaux masques apparus récemment.

S'agissant de télécartes, on rappelle qu'il s'agit de dispositifs électroniques conçus pour permettre le paiement des télécommunications. Aujourd'hui, FRANCE TELECOM vend des télécartes sous emballage scellé à des consommateurs anonymes. Environ 5 000 000 de télécartes sont vendues chaque mois. Plus de 100 000 000 de télécartes ont été produites à ce jour. C'est un marché en pleine expansion.

Les composants, dans ces télécartes, mesurent quelques millimètres carrés. Il s'agit de simples mémoires dépourvues de possibilité de calcul. Leurs fabricants souhaiteraient les utiliser largement dans d'autres applications. Mais les problèmes posés sont difficiles à résoudre, compte tenu des capacités logiques fort limitées de ces puces.

La technologie évoluant et la fraude faisant son apparition, un projet de télécarte de deuxième génération est en cours de développement. Le composant est une mémoire dotée d'une logique cablée que l'on peut authentifier grâce à un calcul cablé. Ce composant est prévu pour limiter la fraude. Toutefois, l'usage du composant dans d'autres applications impliquerait de partager quelques renseignements qu'il vaudrait mieux garder confidentiels, voire secrets. Et de toute façon, dans ce composant, les jetons sont encore limités à un seul bit par unité de taxe, ce qui interdit de partager le même stock de jetons entre plusieurs opérateurs.

S'agissant maintenant des cartes bancaires, on sait qu'aujourd'hui, en France, des puces y sont intégrées. Ces puces portent le masque M4. Le nombre de cartes M4 produites à ce jour (pas uniquement pour les banques) s'élève à environ 20 000 000. La taille des puces supportant M4 est aujourd'hui de quinze à vingt millimètres carrés.

Chaque carte M4 est munie d'un secret diversifié. Dans chaque système utilisant des cartes M4, des modules de sécurité disposant de la clé maîtresse du système savent reconstituer en interne le secret diversifié de toute carte à laquelle ils s'adressent, puis l'utiliser pour vérifier les résultats reçus ou protéger les actions commandées.

Le masque M4 est personnalisé de diverses manières. Les cartes bancaires le sont en mode B0. Les cartes M4 se trouvent donc utilisées dans des applications très diverses. Mais, en pratique, il est très difficile de faire coexister plusieurs applications dans une même carte au masque M4, ce masque n'ayant pas été conçu pour cela.

Des nouveaux masques sont apparus récemment, tels que le masque PC2 conçu pour la télévision à péage par le CCETT (Centre Commun d'Etudes de Télédiffusion et Télécommunications) et BULL CP8, le masque MP conçu par BULL CP8, et le masque TB100 conçu par PHILIPS et BULL CP8. Chaque carte porte un (ou plusieurs) trousseau(x) de clés cryptographiques. Dans chaque trousseau, les clés utilisées pour gérer les éléments du système (clés de gestion) sont distinctes des clés utilisées pour contrôler l'accès aux services (clés d'exploitation). Ces masques sont conçus pour partager la carte entre plusieurs émetteurs de titres d'accès et opérateurs de services. Une clé maîtresse doit être mise en oeuvre dans un module de sécurité, encore appelé "carte-mère" pour ces divers masques, afin d'ouvrir ou de gérer une entité dans la carte d'un utilisateur, encore appelée "carte-fille".

Les concepts développés dans ces masques récents sont en cours de normalisation à l'ISO. Dans les cartes partagées entre plusieurs applications (cartes dites "multi-services"), une entité maîtresse, matérialisée par un fichier maître appelé "Master File" (en abrégé MF) a créé des entités dédiées, matérialisées par des fichiers dédiés appelés "Dedicated Files" (en abrégé DFs). Des entités dédiées ont pu, à leur tour, créer de nouvelles entités dédiées, de manière récursive. Chacun de ces fichiers (MF, DF) contient divers fichiers élementaires appelés "Elementary Files" (en abrégé EFs). Le principal droit qu'une entité maîtresse ou dédiée se réserve est alors le droit de vie et de mort sur chacune des entités dédiées descendant immédiatement d'elle. En tuant une entité, on tue évidemment en même temps toutes celles qui en descendent.

Dans une carte multi-services, l'autorité ayant émis la carte est représentée par l'entité maîtresse qui a délégué une partie de ses pouvoirs à des entités dédiées en leur attribuant une part des ressources de la carte. Plusieurs entités dédiées coexistent dans une même carte sans que la sécurité de l'une n'affecte la sécurité des autres, et sans que l'entité maîtresse ne perturbe les entités dédiées et ne puisse atteindre les secrets qui y sont déposés.

Les principales opérations effectuées durant la phase "utilisation" de la vie des cartes multi-services sont les suivantes :
- émission : elle consiste à créer l'entité maîtresse par l'autorité émettant la carte,
- personnalisation : elle consiste à compléter l'entité maîtresse pour l'attribuer à un consommateur,
- délégation : elle consiste à créer et à attribuer les ressources de la carte à une entité dédiée matérialisant dans la carte un émetteur de titres d'accès,
- valorisation : elle consiste à noter ou modifier dans une entité dédiée diverses informations matérialisant les droits d'accès ou décrivant un contrat entre le consommateur et un opérateur de services,
- consommation : elle consiste à noter ou modifier dans une entité dédiée des informations décrivant l'exécution du contrat entre le consommateur et un opérateur de services.

Pour résoudre les problèmes posés par ces opérations jalonnant la vie des cartes multi-services, les masques d'aujourd'hui utilisent des algorithmes cryptographiques à clé secrète, avec une hiérarchie de clés secrètes. L'émetteur de cartes dispose d'un trousseau de clés maîtresses qui sont diversifiées dans les cartes en clés secondaires, en fonction de données changeant d'une carte à l'autre (numéro de série de la puce ou numéro de compte du consommateur, par exemple). Chaque module de sécurité ou chaque carte-mère enregistre et utilise une ou plusieurs clés maîtresses. Les premières clés d'un émetteur de titres d'accès ou d'un opérateur de services sont alors transmises sous la protection d'une clé appartenant à l'émetteur de la carte.

Il n'est cependant pas très sûr, pour l'émetteur de titres d'accès ou pour l'opérateur de services, de distribuer ses propres secrets sous le contrôle des secrets d'un autre, fut-il l'émetteur de la carte, ni pour l'émetteur de cartes de mettre des clés maîtresses dans des modules de sécurité relativement anonymes et dispersés en grand nombre dans un environnement qui échappe à son contrôle. Des algorithmes à clé publique seront à terme utilisés dans les cartes pour améliorer la gestion des clés et l'authentification des cartes. Les techniques à apport nul de connaissance sont l'ultime aboutissement des algorithmes à clé publique. Le procédé objet de l'invention qui va être décrite, est cependant indépendant de la cryptographie utilisée dans les cartes.

Dans ce contexte général des cartes à puce, la présente invention propose un procédé de paiement électronique qui reprend les opérations principales connues dans ce genre de procédé, à savoir :
a) une entité émettrice apte à émettre de la monnaie électronique attribue à des cartes des moyens de paiement appelés jetons, ces jetons étant constitués par des informations binaires écrites dans un fichier mémoire de la carte,
b) pour rémunérer, avec une telle carte, un service à un opérateur de service, on débite la carte d'un certain nombre de jetons au profit de l'opérateur de service,
c) l'opérateur de service comptabilise les jetons reçus et se fait rémunérer en conséquence par l'entité émettrice,
le procédé de l'invention étant alors caractérisé par le fait que :
A) on constitue, dans l'entité émettrice, une liasse initiale d'un nombre (t) de numéros consécutifs et on retire de cette liasse certains numéros choisis de manière quasi-aléatoire, ce qui laisse subsister une liasse de numéros disponibles à la vente,
B) pour attribuer des jetons à une carte déterminée :
   - on sélectionne de manière quasi-aléatoire certains numéros de la liasse de numéros disponibles à la vente,
   - on attribue ces numéros à la carte en guise de jetons, chaque jeton (appelé "ticket") étant ainsi constitué par un groupe de bits codant le numéro attribué en guise de jeton,
   - on retire de la liasse de numéros disponibles à la vente les numéros ainsi attribués,
      C) pour rémunérer une prestation à l'aide de tickets, la carte révèle à l'opérateur de service les numéros de ces tickets,
      D) l'opérateur de service collationne tous les numéros qu'il a reçus de diverses cartes et les retourne à l'entité émettrice pour paiement de ses services, ladite entité vérifiant l'authenticité des numéros ainsi retournés.

L'émetteur de titres d'accès peut être une banque émettant de la monnaie électronique pour payer toute sorte de services, un organisme émettant des chèques de voyage, ou encore un organisme émettant des jetons pour payer des services spécifiques par unités de taxe.

La numérotation des jetons, qui est la caractéristique essentielle de l'invention, permet de résoudre le problème posé à savoir le contrôle de l'authenticité des jetons, tout en préservant l'anonymat.

La présente invention a également pour objet une carte de paiement électronique pour la mise en oeuvre du procédé qui vient d'être défini. Cette carte, qui est une carte de consommation, comprend :
- un fichier mémoire apte à recevoir, d'une carte dite de gestion, des informations binaires constituant des moyens de paiement appelés jetons,
- des moyens de dialogue avec une carte dite d'exploitation appartenant à un opérateur de service,
- des moyens pour débiter le fichier mémoire d'un certain nombre de jetons sur requête de la carte d'exploitation,
cette carte de consommation étant caractérisée par le fait que le fichier mémoire est organisé en une pluralité de groupes de bits, chaque groupe de bits codant un numéro qui est le numéro attribué en guise de jeton, ce jeton étant appelé "ticket", le fichier mémoire comprenant ainsi un carnet de tickets, les moyens pour débiter le fichier mémoire d'un certain nombre de tickets étant aptes à révéler à la carte d'exploitation les numéros des tickets à débiter.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés sur lesquels :
- la figure 1 illustre schématiquement l'organisation d'un système général mettant en oeuvre le procédé de l'invention ;
- la figure 2 montre une liasse de numéros,
- la figure 3 montre une grille de distribution, - la figure 4 illustre des grilles de vente,
- la figure 5 montre un mode de réalisation d'un ticket à 2 octets,
- la figure 6 illustre une grille de contrôle.

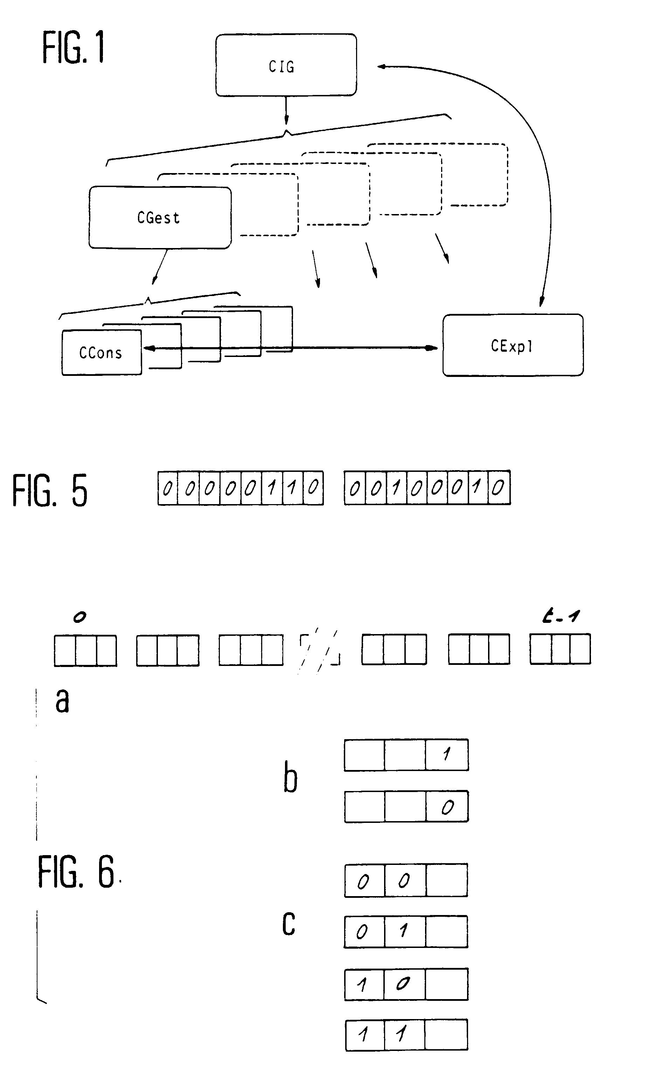

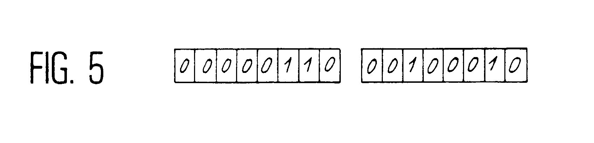

De manière générale mais non exclusive, le procédé de l'invention peut être mis en oeuvre dans un système tel qu'illustré sur la figure 1. Ce système utilise quatre types de cartes à puce :
- des cartes initiales de gestion (CIG) (de type carte grand-mère) servant produire des cartes mères de gestion,
- des cartes-mères de gestion (CGest) insérant des jetons dans les cartes de consommation,
- des cartes de consommation (CCons) (de type cartes-filles) matérialisant des titres d'accès sous forme de jetons,
- des cartes d'exploitation (CExpl) (de type cartes-mères) prélevant des jetons dans les cartes de consommation (CCons).

Les cartes initiales de gestion (CIG), les cartes-mères de gestion (CGest) et les cartes-mères d'exploitation (CExpl) sont émises par un émetteur de cartes qui les personnalise pour des émetteurs de titres d'accès.

Les cartes-filles de consommation (CCons) sont également émises par l'émetteur de cartes. Suivant les modalités de distribution, ces cartes peuvent soit rester la propriété de l'émetteur de cartes, soit devenir la propriété de leur porteur. Anonymes de préférence, elles pourraient toutefois être personnalisées.

On notera que, dans certaines réalisations, l'émetteur de cartes peut être confondu avec l'émetteur de titres d'accès.

Le but de l'invention est de vendre des jetons numérotés, encore appelés "tickets". Ces tickets sont organisés en carnets formés de numéros pris au hasard dans une liasse, ou du moins, selon un hasard apparent pour un observateur. Les ventes au sein de chaque liasse sont volontairement limitées pour conserver une forte proportion de numéros invendus (par exemple, de l'ordre de 50%) choisis également au hasard, ou apparemment au hasard. Seul l'émetteur de titres d'accès distingue les "vrais jetons" des "faux jetons".

Les cartes de gestion sont personnalisées afin de responsabiliser les vendeurs. Le hasard, ou tout au moins l'apparence de hasard liée à des pseudo-aléas, est introduit dans la numérotation des jetons pour :
- assurer la protection de l'anonymat des consommateurs,
- permettre un audit des relevés d'opération afin de détecter et diagnostiquer des anomalies,
- contrôler l'activité des opérateurs de services en situation de concurrence.

Grâce à la numérotation des jetons, la fraude dans le cadre de l'invention est détectée et localisée dès son apparition. L'objectif est bel et bien de mettre le fraudeur en position d'insécurité.

Si, à la suite d'un viol d'une carte de consommation, un trousseau de clés et un carnet de tickets sont révélés dans une liasse, on ne pourra constituer ensuite de fausses cartes qui passeraient inaperçues.

De même, si, à la suite du viol d'une carte de gestion, un trousseau de clés et un ensemble de numéros vendables sont révélés dans une liasse, il suffit que le viol de la carte soit signalé pour que les efforts du fraudeur soient anéantis. Et si le vol n'est pas signalé, on détecte quand même la fraude et le vendeur suspect.

De même encore, si un opérateur veut gonfler sa recette en ajoutant des numéros dans ses relevés d'opération, s'il invente des numéros, il ne sait pas éviter les invendus, qui sont de véritables faux jetons. Et s'il répète des numéros déjà reçus, il se fait repérer avant même que la fraude ne soit suffisamment étendue pour devenir rentable.

Il faut observer que, puisque la fraude est mesurable, on peut adapter le niveau des sanctions à l'ampleur de celle-ci.

De façon générale, les fonctions remplies dans les diverses cartes du système de la figure 1 sont les suivantes**.**

### Cartes de gestion

L'émetteur de titres d'accès distribue des cartes de gestion à des vendeurs. Chaque carte de gestion forme des carnets de tickets dans le cadre d'une liasse définie par un identifiant, une période de validité et un trousseau de clés secrètes. Les ventes de carnets y sont comptabilisées par type de carnets. Chaque carte de gestion contrôle ses opérations sur une grille de vente (dont la structure sera décrite plus loin), de manière à ce que chaque numéro ne puisse être vendu qu'une seule fois. L'identifiant de la liasse et le nombre de carnets vendus peuvent être consultés librement dans la carte de gestion.

Mais la consultation de la grille de vente est soumise à une authentification préalable de l'émetteur de titres d'accès. L'état de la grille est alors fourni par la carte de gestion, de préférence sous forme embrouillée afin que l'observation des données échangées à l'interface ne permette pas de connaître l'état de la grille de vente. Ainsi, l'émetteur peut consulter à distance l'état temporaire de ses grilles de vente dans ses cartes de gestion chez les vendeurs. Quand la vente est close, la carte de gestion est retournée par le vendeur à l'émetteur de titres d'accès.

L'opération de vente d'un carnet de n tickets comporte l'opération élémentaire suivante répétée n fois : un numéro est pris au hasard ; le premier numéro vendable à partir de ce numéro est sélectionné (quand on atteint le dernier numéro, on revient automatiquement au premier) ; la grille de vente est mise à jour dans la carte de gestion en inversant l'état du bit correspondant au numéro vendu.

### Cartes de consommation

La création d'un carnet de n tickets consiste à écrire, dans un fichier dédié d'une carte de consommation, un identifiant de liasse, une période de validité, un trousseau de clés secrètes et les n tickets. Les numéros transitant entre la carte de gestion et la carte de consommation sont de préférence embrouillés afin que l'observation des données échangées à l'interface ne permette pas de dresser la liste des numéros vendus.

Les numéros des tickets non consommés dans un carnet sont de préférence maintenus secrets dans la carte de consommation. Ils sont révélés un par un au moment de leur consommation. Un ticket révélé n'est plus utilisable et n'est plus secret. Un ticket consommé est invalidé dans la carte de consommation. Si la technologie le permet, les carnets invalidés, voire même les tickets invalidés, peuvent être effacés dans la carte de consommation.

### Cartes d'exploitation

L'émetteur de titres d'accès distribue également des cartes d'exploitation aux opérateurs de services. Chaque carte d'exploitation recueille des tickets dans le cadre de liasses définies chacune par un identifiant, une période de validité et un trousseau de clés secrètes. L'opération de consommation comporte une authentification réciproque entre la carte de consommation et la carte d'exploitation en utilisant une des clés secrètes du trousseau. Au cours de cette authentification, à la demande de la carte d'exploitation, des numéros sont révélés par la carte de consommation à la carte d'exploitation. Les numéros transitant entre la carte de consommation et la carte d'exploitation sont de préférence embrouillés afin que l'observation des données échangées à l'interface ne permettent pas de dresser la liste des numéros consommés.

Pour chaque liasse qu'il voit, l'opérateur de services recueille donc des numéros qu'il peut organiser soit en liste ordonnée de numéros, soit en grille de consommation, suivant le procédé le plus économique. Périodiquement, il signe ces listes ou ces grilles, par exemple par un code d'intégrité, puis les remonte vers le système central pour endossement, c'est-à-dire pour récupérer le paiement de ses services. Il prépare des rapports d'anomalie quand il détecte des liasses en opposition ou sous surveillance spéciale. En effet, l'émetteur des titres d'accès lui fournit aussi des listes noires d'identifiants de liasse et de certains tickets dans certaines liasses.

Différentes étapes particulières du procédé de l'invention vont maintenant être décrites.

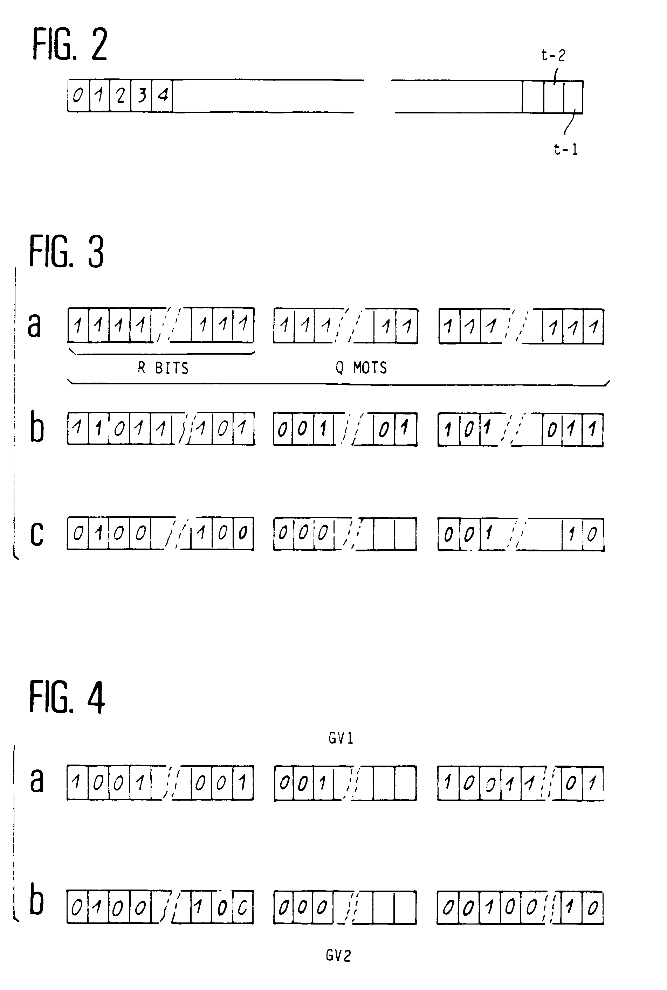

Tout d'abord, on forme une suite de nombres consécutifs organisée en liasse. Une liasse est constituée par un identifiant, une période de validité, un trousseau de clés secrètes et un champ de t numéros consécutifs. Ces informations sont créées par un émetteur de titres d'accès. La figure 2 montre ainsi schématiquement un champ de t numéros consécutifs (de 0 à t-1).

Une liasse peut comprendre par exemple 64 000 jetons numérotés de 0 à 63 999, codés chacun par 16 bits ; la vente peut être limitée à environ 30 000 numéros dans la liasse. Un carnet peut comporter 10, 20, 60, 90, 120 ou même 240 tickets. On peut même vendre à l'unité, bien que cela n'optimise pas l'utilisation des mémoires dans la carte de consommation.

Dans une opération d'émission et de personnalisation des cartes initiales de gestion, l'émetteur de cartes prépare des cartes initiales de gestion (de type "grand-mères") portant un fichier dédié, avec un identificateur, une première clé, une grille de distribution et une possibilité de compter et de repérer les cartes de gestion produites.

Une grille de distribution est illustrée sur la figure 3. Elle comprend Q mots de R bits chacun (par exemple 250 mots de 256 bits chacun). Tous ces bits sont au départ à l'état 1 (partie a).

L'émetteur de titres d'accès complète d'abord le fichier dédié pour l'attribuer à une liasse en y mettant l'identifiant de la liasse et un trousseau de clés secrètes. Puis il écarte une certaine proportion de tickets qui ne seront jamais vendus. Pour ce faire, dans chacun des Q mots de la grille de distribution, il met à 0 un certain nombre de bits pris au hasard, ou, du moins, selon un hasard apparent pour un observateur. L'état de la grille obtenue est illustré sur la partie b de la figure 3. On peut par exemple mettre 60 bits à 0 dans chaque mot de 256 bits. Ainsi, 15 000 numéros sont écartés.

L'émetteur de cartes prépare aussi les cartes de gestion. Chaque carte de gestion porte un fichier dédié, avec un identificateur, une première clé, une possibilité de compter les carnets vendus, et enfin, une grille de vente. Une grille de vente comporte Q mots de R bits, tous à 1 au départ (par exemple 250 mots de 256 bits). L'émetteur de cartes fournit ces cartes de gestion à l'émetteur de titres d'accès.

L'émetteur de titres d'accès complète d'abord le fichier dédié pour l'attribuer à une liasse en y mettant l'identifiant de la liasse et un trousseau de clés secrètes. Il prépare aussi autant de compteurs que de types de carnets vendables. Un type correspond par exemple à un nombre de tickets par carnet ou à des conditions particulières de tarification.

Puis il y prépare une grille de vente grâce à la carte initiale de gestion, qui permet de distribuer les numéros qui sont encore à l'état 1 dans la grille de distribution (Figure 3b). Pour chacun des Q mots de la grille de distribution, parmi les bits qui sont encore à l'état 1, l'émetteur en choisit un certain nombre au hasard, soit p, ou du moins, selon un hasard apparent pour un observateur. Par exemple, le nombre p vaut 36. L'émetteur met alors à l'état 0 :
- ces p bits dans le mot correspondant de la grille de distribution située dans la carte initiale de gestion (figure 3c),
- les (t-p) autres bits dans le mot correspondant de la grille de vente dans la carte de gestion, on obtient une grille de vente GV1 (figure 4a).

Pour constituer une seconde grille de vente GV2 (figure 4b), les mêmes opérations sont effectuées à partir de la nouvelle grille de distribution (Fig. 3c). Les grilles de ventes GV1, GV2 sont donc disjointes, en ce sens qu'un bit ayant un certain rang ne peut être simultanément à 1 dans les deux grilles. Ainsi, un numéro de la liasse ne peut être vendu qu'une fois.

Elément essentiel d'un fichier dédié dans la carte de gestion, la grille de vente permet de constituer progressivement des carnets de tickets et de les vendre :
- si le j-ième bit de la grille est à 1, alors le ticket correspondant est vendable,
- si le j-ième bit est à 0, alors le ticket correspondant n'est pas vendable,
- à la vente d'un ticket, le bit correspondant passe de 1 à 0.

La consultation de l'état des grilles de vente est réservée à l'émetteur de titres d'accés grâce à une authentification de l'émetteur par la carte de gestion.

Enfin, l'émetteur de titres d'accès complète la carte de gestion. Dans le fichier maître, il porte par exemple une période de vente limitant l'utilisation de la carte de gestion. Dans le fichier dédié à la liasse, il porte par exemple un seuil de vente limitant le pouvoir de vente de la carte de gestion. Par exemple, le seuil de vente peut être fixé à 244.

En résumé, pour une liasse donnée, les ensembles de tickets vendables par chaque carte de gestion sont disjoints, et, après la clôture de vente pour une liasse donnée, la partie commune aux ensembles de numéros invendables dans l'ensemble des cartes de gestion constitue l'ensemble des numéros qui ne seront jamais vendus, soit par décision initiale de l'émetteur de titres d'accès quand il a initialisé la grille de distribution, soit par décision finale de l'émetteur de titres d'accès quand il a clos la vente de la liasse dans la carte initiale de gestion.

L'émetteur de titre d'accès peut constituer, pour la même liasse, plusieurs cartes de gestion ayant le même pouvoir de vente. Chacune de ces cartes de gestion dispose d'un sous-ensemble qui, dans l'exemple pris, comprend 9 000 numéros (250 fois (256-220)) parmi lesquels elle peut en vendre jusqu'à 6 000 (250 fois (244-220) ).

Cependant, le pouvoir de vente peut varier d'une carte de gestion à l'autre. L'émetteur de titres d'accès prépare les cartes de gestion au fur et à mesure des besoins des vendeurs.

En pratique, une carte de gestion pourrait évidemment vendre plusieurs liasses en portant les fichiers dédiés correspondants.

Pour la vente de carnets de tickets, on procède alors comme suit. On rappelle que, dans chaque carte de gestion, il existe ainsi une grille de vente comportant Q mots de R bits chacun. Au départ des ventes, dans chacun de ces mots, il y a déjà R-p bits à l'état 0, fixés par l'émetteur des titres d'accès (dans l'exemple pris plus haut on a Q=250, R=256, t=64 000 et p=36. Dans chaque fichier dédié à une liasse dans chaque carte de gestion, un pointeur courant (qui, dans l'exemple de Q=250 mots, est un octet) est entretenu. Il est à zéro au départ des ventes, quand la carte de gestion est fournie au vendeur par l'émetteur de titres d'accès.

On peut rappeler les conventions de la grille de vente dans la carte de gestion :
- si le bit est à 1, alors le ticket correspondant est vendable,
- si le bit est à 0, alors le ticket correspondant n'est pas vendable,
- à chaque vente de tickets, le bit correspondant passe de 1 à 0.

Au début de chaque vente de carnet, la carte de gestion vérifie que la date courante figure bien dans la période de vente. Si la période n'est pas commencée, la carte refuse la vente. Si la période est écoulée, la carte invalide la fonction de vente.

Durant la vente, à chaque ticket, le pointeur est incrémenté de 1 modulo Q (par exemple 250), c'est-à-dire que l'on passe au mot suivant. Puis, un nouvel indice (qui, dans le cas où R=256, est un octet) est produit au hasard dans la carte de gestion. Si le jeton correspondant n'est pas vendable (bit à zéro) dans le mot de R=256 bits désigné par le pointeur, alors l'indice est incrémenté de 1 modulo R=256 jusqu'à trouver un jeton vendable dans le mot pointé.

Le numéro du ticket vendu comporte les bits du pointeur et ceux de l'indice, soit 16 bits dans l'exemple pris. Le pointeur courant est en poids fort (valant de 0 à 249) et l'indice courant en poids faible (valant de 0 à 255). L'indice courant constitue l'information secrète à transférer depuis la carte de gestion jusqu'à la carte de consommation.

Il est tout à fait possible d'étendre les numéros des tickets en utilisant une base. Le numéro du ticket est alors constitué par la base en poids fort et les seize bits précédents en poids faible. Cela permet d'utiliser des liasses plus étendues.

A la fin de chaque vente de carnet, la carte de gestion met à jour le compteur correspondant au type du carnet vendu. Puis elle compte le nombre de bits à zéro dans le mot désigné par le pointeur courant. Si ce nombre atteint ou dépasse le seuil autorisé, (244 dans l'exemple pris plus haut), alors le pouvoir de vente est épuisé dans le fichier dédié. Par conséquent, la carte de gestion ferme les ventes en invalidant automatiquement le fichier dédié.

L'utilisation des cartes de consommation s'effectue alors de la manière suivante. Dans une carte de consommation, on trouve des carnets de tickets matérialisés par autant de fichiers dédiés. L'identificateur d'un fichier dédié repère l'émetteur de titres d'accès. Un carnet de tickets comporte l'identifiant de la liasse, une période de validité, un trousseau de clés secrètes. Le nombre de tickets du carnet noté par n, le pointeur courant du carnet, la valeur maximum du pointeur (par exemple 250, sur un octet), éventuellement la valeur minimum du pointeur (ici 0, sur un octet), et enfin une liste de n indices (écrits chacun par exemple sur un octet). Chacun de ces indices est secret tant qu'il n'est pas consommé. En le révélant, la carte consomme le ticket correspondant.

Le pointeur du carnet dans la carte de consommation est fixé par la valeur du pointeur courant dans la carte de gestion au moment où le premier numéro a été sélectionné pour former le carnet.

Pour consommer des tickets, la carte de consommation donne d'abord la valeur maximum du pointeur, la valeur minimum du pointeur, puis le pointeur courant qui pointe sur le premier ticket non-consommé. Ensuite, la carte de consommation révèle les indices des tickets à la demande.

La figure 5 montre un ticket correspondant au cas où le pointeur P et l'indice I sont des octets. Dans l'exemple illustré, le ticket correspond au sixième mot et au 34ème bit de ce mot, ce qui correspond au numéro 5x256+34=1314.

Au niveau du système central, pour chaque liasse émise, les informations de gestion sont résumées dans une grille de contrôle qui est une suite de 3t bits, avec t bits pour les consommations et t doublets de 2 bits chacun pour l'état des ventes. Une telle grille de contrôle est représentée sur la figure 6 (partie a).

Comme illustré sur la figure 6, partie b :
- si le j-ième bit consommation vaut 1, alors le j-ième ticket n'a pas encore été présenté par un opérateur,
- si le j-ième bit consommation vaut 0, alors le j-ième ticket a déjà été présenté par un opérateur.

Comme illustré sur la figure 6, partie c :
- si le j-ième doublet de vente vaut 00, alors le j-ième ticket ne sera pas vendu (décision initiale de l'émetteur),
- si le j-ième doublet de vente vaut 01, alors le j-ième ticket ne sera pas vendu (clôture de la vente),
- si le j-ième doublet de vente vaut 10, alors le j-ième ticket a été vendu,
- si le j-ième doublet de vente vaut 11, alors le j-ième ticket est en vente.

A chaque fois qu'une carte de gestion est consultée ou récupérée, ou qu'une grille de consommation est présentée pour endossement, l'émetteur de titres d'accès met à jour le grille de contrôle correspondant à la liasse.

Un rapport d'anomalie est établi dès la première consommation quand le ticket ne sera pas vendu, et à la deuxième consommation dans les autres cas. Bien entendu, il peut arriver que l'information décrivant la consommation d'un ticket soit portée sur la grille de contrôle avant l'information décrivant la vente du ticket.

Le rapport d'anomalie comprend l'identifiant de la liasse, le numéro du ticket et aussi le nom de l'opérateur ayant endossé le ticket suspect. L'émetteur de titres d'accès peut éventuellement retrouver la carte de gestion qui a vendu le ticket suspect. La spécification des rapports d'anomalies pourra être affinée après la mise en service du système. Les rapports d'anomalies doivent être accessibles par identifiant de liasse et par numéro de ticket, mais aussi par identifiant d'opérateur, voire par identifiant de vendeur.

L'émetteur de titres d'accès peut aussi mettre à disposition des opérateurs une partie de l'information sur les invendus, afin de le faire participer au contrôle. Pour ce faire, l'émetteur de titres d'accès établit une liste partielle de contrôle d'environ la moitié des numéros écartés initialement. Cette liste de contrôle peut avantageusement être insérée dans la carte d'exploitation.

Si la transmission des numéros consommés est embrouillée entre la carte de consommation et la carte d'exploitation, alors la liste de contrôle peut même ne pas être consultable par l'opérateur de service.

Dans le cas d'un fichier de titres d'accès matérialisant un carnet de tickets selon le procédé de l'invention, une notion supplémentaire qui est celle d'état du fichier (libre ou occupé) est utile.

L'opération de consommation commence par une authentification réciproque et un échange d'informations (identificateurs, identifiant de liasse, date et heure, solde en tickets) entre la carte de consommation et une carte d'exploitation. Cette authentification utilise dans le trousseau une clé secrète réservée à l'opérateur concerné. Le fichier dédié matérialisant le carnet est alors mis en "état occupé" dans la carte de consommation, qui peut ensuite être déconnectée du système.

A la fin de l'opération, une autre authentification réciproque intervient entre la carte de consommation et une carte d'exploitation (ce n'est pas nécessairement la même carte d'exploitation). Cette authentification utilise dans le trousseau une clé secrète appartenant au même opérateur. La carte d'exploitation fixe le nombre de tickets demandés. Après la consommation (révélation de numéros), le fichier de titres d'accès est "libéré" ; les tickets consommés peuvent ensuite être détruits dans la carte de consommation.

Si la liasse se trouve en opposition, le carnet n'est pas refermé, c'est-à-dire que le fichier reste en "état occupé". Le consommateur est invité à se rendre à un guichet de vente pour régulariser sa situation.

## Revendications

1. Procédé de paiement électronique à l'aide de cartes à microprocesseur dans lequel :
a) une entité émettrice apte à émettre des titres d'accès attribue à des cartes des moyens de paiement appelés jetons, ces jetons étant constitués par des informations binaires écrites dans un fichier mémoire de la carte,
b) pour rémunérer, avec une telle carte, un service à un opérateur de service, on débite la carte d'un certain nombre de jetons au profit de l'opérateur de service,
c) l'opérateur de service comptabilise les jetons reçus et se fait rémunérer en conséquence par l'entité émettrice,
ce procédé étant caractérisé par le fait que :
A) on constitue, dans, l'entité émettrice, une liasse initiale d'un nombre (t) de numéros consécutifs et on retire de cette liasse certains numéros choisis de manière quasi-aléatoire, ce qui laisse subsister une liasse de numéros disponibles à la vente,
B) pour attribuer des jetons à une carte déterminée :
- on sélectionne de manière quasi-aléatoire certains numéros de la liasse de numéros disponibles à la vente,
- on attribue ces numéros à la carte en guise de jetons, chaque jeton (appelé "ticket") étant ainsi constitué par un groupe de bits codant le numéro attribué en guise de jeton,
- on retire de la liasse de numéros disponibles à à la vente les numéros ainsi attribués,
C) pour rémunérer une prestation à l'aide de tickets, la carte révèle à l'opérateur de service les numéros de ces tickets,
D) l'opérateur de service collationne tous les numéros qu'il a reçus de diverses cartes et les retourne à l'entité émettrice pour paiement de ses services, ladite entité vérifiant l'authenticité des numéros ainsi retournés.

2. Procédé selon la revendication 1, caractérisé par le fait que, pour constituer la liasse de numéros disponibles à la vente :
- on prend une suite de bits tous égaux à 1 en nombre (t) égal au nombre de numéros consécutifs constituant la liasse initiale définie dans l'entité émettrice,
- on choisit de manière quasi-aléatoire certains de ces bits et on les met à 0, ce qui laisse une grille de bits à 0 et à 1 dite grille de distribution,
- chaque bit de cette grille de distribution désigne par son rang (j) le numéro ayant même rang dans la liasse initiale constituée dans l'entité émettrice, ce numéro étant considéré comme disponible à la vente si le bit de la grille de distribution est à 1 et non disponible à la vente si ce bit est à 0.

3. Procédé selon la revendication 2, caractérisé par le fait qu'on constitue des grilles de vente, par les opérations suivantes :
- on prend une suite d'un nombre (t) de bits tous égaux à 1,
- on choisit dans la grille de distribution un nombre (p) de bits à 1,
- on met à 0 les (t-p) bits de la suite de t bits dont les rangs ne correspondent pas aux rangs des p bits à 1 ainsi choisis dans la grille de distribution, ce qui laisse une suite de p bits à 1 et de t-p bits à 0, constituant une grille de vente,
- on met à 0 les p bits choisis dans la grille de distribution,
- la vente de tickets à une carte à partir d'une telle grille de vente consistant à choisir des bits parmi les bits à 1 de la grille de vente, le rang de ces bits choisis indiquant le rang des numéros à prendre dans la liasse de numéros disponibles à la vente constituée dans l'entité émettrice, à transmettre ces numéros à la carte et à mettre à 0 les bits correspondants dans la grille de vente,
- toutes les grilles de vente ainsi formées étant constituées de suites de bits disjointes, chaque numéro de la liasse ne pouvant être ainsi vendu qu'une seule fois.

4. Procédé selon l'une quelconque des revendications 2 et 3, caractérisé par le fait que la grille de distribution et les grilles de vente sont organisées en un nombre Q de mots d'un nombre R de bits, chaque bit de ces grilles étant repéré par un premier groupe de bits appelé pointeur, pointant l'un des Q mots et par un second groupe de bits appelé indice identifiant l'un des R bits dans le mot pointé, un ticket étant ainsi numéroté par deux groupes de bits.

5. Procédé selon la revendication 4, caractérisé par le fait que le pointeur et l'indice sont chacun des octets, chaque ticket étant ainsi numéroté par deux octets, un octet en poids fort qui est un pointeur de mot et un octet en poids faible qui est un indice.

6. Procédé selon la revendication 5, caractérisé par le fait que, pour la vente d'un ticket, le pointeur est incrémenté d'une unité pour pointer le mot suivant dans la grille de vente, un indice est produit au hasard pour désigner un bit d'un mot, et, si ce bit est à 1, l'indice obtenu est transmis à la carte, et si ce bit est à 0, l'indice est incrémenté d'une unité jusqu'à trouver un bit égal à 1, l'indice obtenu étant alors transmis à la carte.

7. Procédé selon l'une quelconque des revendications 1 à 6, caractérisé par le fait qu'on constitue une grille de contrôle formée d'un nombre (t) de groupes de 3 bits, chaque groupe ayant un rang (j) comportant :
- un premier bit indiquant par son état 0 ou 1 si le numéro de même rang j de la liasse a été utilisé ou non par une carte,
- un deuxième et un troisième bits constituant un doublet dont les divers états indiquent si le numéro de rang j a été vendu, est en vente ou ne sera pas vendu.

8. Procédé selon l'une quelconque des revendications précédentes, caractérisé par le fait que le fichier dédié matérialisant un carnet de tickets dans une carte de consommation :
- est mis dans un "état occupé" lors d'une première étape d'authentification réciproque entre cette carte de consommation et une carte d'exploitation, et
- est remis dans un "état libre" après consommation du nombre de tickets requis par la carte d'exploitation.

9. Procédé selon la revendication 1, caractérisé par le fait que les numéros des tickets transitent sous une forme embrouillée durant les échanges respectivement entre la carte initiale de gestion et la carte de gestion, entre la carte de gestion et la carte de consommation, entre la carte de consommation et la carte d'exploitation.

10. Procédé selon la revendication 1, caractérisé par le fait qu'on constitue pour l'opérateur une liste partielle de contrôle donnant des numéros qui ne seront jamais vendus.

11. Procédé selon la revendication 10, caractérisé par le fait que la liste partielle de contrôle de l'opérateur est intégrée dans la carte d'exploitation.

12. Carte de paiement électronique pour la mise en oeuvre du procédé selon la revendication 1, cette carte, dite de consommation, comprenant :
- un fichier mémoire apte à recevoir, d'une carte dite de gestion, des informations binaires constituant des moyens de paiement appelés jetons,
- des moyens de dialogue avec une carte dite d'exploitation appartenant à un opérateur de service,
- des moyens pour débiter le fichier mémoire d'un certain nombre de jetons sur requête de la carte d'exploitation,
cette carte de consommation étant caractérisée par le fait que le fichier mémoire est organisé en une pluralité de groupes de bits, chaque groupe de bits codant un numéro qui est le numéro attribué en guise de jeton, ce jeton étant appelé "ticket", le fichier mémoire comprenant ainsi un carnet de tickets, les moyens pour débiter le fichier mémoire d'un certain nombre de tickets étant aptes à révéler à la carte d'exploitation les numéros des tickets à débiter.

13. Carte selon la revendication 12, caractérisée par le fait que chaque groupe de bits du fichier comprend un pointeur et un indice, chaque ticket du fichier mémoire étant ainsi numéroté par deux groupes de bits.

14. Carte selon la revendication 13, caractérisée par le fait que le pointeur et l'indice sont chacun des octets, chaque ticket du fichier mémoire étant ainsi numéroté par deux octets, un octet de poids fort qui est un pointeur de mot et un octet de poids faible qui est un indice.

15. Carte selon la revendication 12, caractérisée par le fait qu'elle comprend des moyens pour :
- mettre le fichier dans un "état occupé" lors d'une première étape d'authentification réciproque entre la carte de consommation et la carte d'exploitation, et
- remettre le fichier dans un "état libre" après débit du nombre de tickets requis par la carte d'exploitation.

## Patentansprüche

1. Verfahren zum elektronischen Zahlen mit Hilfe von Mikroprozessor-Karten, bei dem
a) eine zur Ausgabe von Zugangsrechten befähigte Ausgabeinstitution Karten Zahlungsmittel zuordnet, die als Wertmarken bezeichnet werden, welche durch Binärinformationen gebildet werden, die in eine Speicherkartei der Karte eingeschrieben sind;
b) um einen Leistungserbringer für einen Dienst zu entlohnen, man die Karte mit einer gewissen Anzahl von Wertmarken zugunsten des Leistungserbringers belastet;
c) der Leistungserbringer die erhaltenen Wertmarken bucht und sich dann von der Ausgabeinstitution entlohnen läßt;
**dadurch gekennzeichnet**, daß
A) man in der Ausgabeinstitution einen Anfangssatz einer gewissen Anzahl (t) von aufeinanderfolgenden Zahlen bildet und man aus diesem Satz gewisse Zahlen auf Quasi-Zufallsbasis herauszieht, wodurch ein Satz von für den Verkauf verfügbaren Zahlen übrigbleibt,
B) um Wertmarken einer bestimmten Karte zuzuordnen:
- man auf Quasi-Zufallsbasis gewisse Zahlen des Satzes von für den Verkauf verfügbaren Zahlen auswählt,
- man diese Zahlen der Karte als Wertmarken zuordnet, wobei jede Wertmarke (als Ticket bezeichnet) somit durch eine Gruppe von Bits gebildet wird, welche die als Wertmarke zugeordnete Zahl codiert,
- man aus dem Satz von für den Verkauf verfügbaren Nummern die so zugeordneten Nummern herauszieht,
C) um eine Leistung mit Hilfe von Tickets zu bezahlen, teilt die Karte dem Leistungserbringer die Zahlen dieser Tickets mit,
D) der Leistungserbringer übernimmt sämtliche Zahlen, die er von verschiedenen Karten erhalten hat und gibt sie an die Ausgabeinstitution zur Bezahlung seiner Dienste zurück, wobei die Institution die Echtheit der so zurückübertragenen Zahlen verifiziert.

2. Verfahren nach Anspruch 1,
**dadurch gekennzeichnet,**
daß zur Bildung des Satzes von für den Kauf verfügbaren Zahlen:
- man eine Folge von Bits nimmt, die sämtlich den Wert "1" haben, und deren Anzahl (t) der Anzahl von aufeinanderfolgenden Zahlen entspricht, die den von der Ausgabeinstitution definierten Anfangssatz bilden,
- man auf Quasi-Zufallsbasis gewisse dieser Bits auswählt und sie auf "0" setzt, wodurch ein Bitmuster aus "0" und "1" verbleibt, welches als Verteilungsmuster bezeichnet wird,
- jedes Bit dieses Verteilungsmusters durch seinen Stellenwert "j" die Zahl bezeichnet, die in dem durch die Ausgabeinstitution gebildeten Anfangssatz den gleichen Stellenwert hat, wobei diese Zahl dann als für den Verkauf verfügbar betrachtet wird, wenn das Bit des Verteilungsmusters den Wert "1" hat, hingegen als nicht für den Verkauf verfügbar betrachtet wird, wenn dieses Bit den Wert "0" hat.

3. Verfahren nach Anspruch 2,
**dadurch gekennzeichnet,**
daß man durch folgende Operationen Verkaufsmuster bildet:
- man nimmt eine Folge einer Anzahl (t) von Bits, die sämtlich den Wert "1" haben,
- man wählt in dem Verkaufsmuster eine Anzahl (p) von Bits mit dem Wert "1" aus,
- man setzt die (t-p) Bits der Folge von t Bits, deren Stellenwerte nicht den Stellenwerten der so in dem Verteilungsmuster ausgewählten p Bits mit dem Wert "1" entsprechen, auf den Wert "0", was eine Folge von p Bits mit dem Wert "1" und (t-p) Bits mit dem Wert "0" übrigläßt, welche ein Verkaufsmuster bildet,
- man setzt die in dem Verteilungsmuster gewählten p Bits auf "0",
- der Verkauf von Tickets auf einer Karte mit einem solchen Verkaufsmuster besteht darin, unter den Bits mit dem Wert "1" des Verkaufsmusters Bits auszuwählen, wobei der Stellenwert dieser ausgewählten Bits den Stellenwert der Zahlen angibt, die in dem von der Ausgabeinstitution gebildeten Satz von für den Verkauf verfügbaren Zahlen herzunehmen sind, diese Zahlen auf die Karte übertragen werden, und die entsprechenden Bits in dem Verkaufsmuster auf "0" gesetzt werden,
- sämtliche so gebildeten Verkaufsmuster werden durch disjunktive Bitfolgen gebildet, wobei jede Zahl des Satzes nur ein einziges Mal verkauft werden kann.

4. Verfahren nach einem der Ansprüche 2 und 3,
**dadurch gekennzeichnet,**
daß das Verteilungsmuster und die Verkaufsmuster in Form einer Anzahl Q von Worten mit jeweils einer Anzahl von R Bits organisiert sind, wobei jedes Bit dieser Muster festgelegt wird durch eine erste Gruppe von Bits, als Zeiger bezeichnet, welcher auf die Q Wörter zeigt, und eine zweite Gruppe von Bits, die als Index bezeichnet wird und eines der R Bits in dem bezeichneten Wort identifiziert, wobei ein Ticket somit durch zwei Gruppen von Bits numeriert wird.

5. Verfahren nach Anspruch 4,
**dadurch gekennzeichnet,**
daß der Zeiger und der Index jeweils eine Achtergruppe bilden, jedes Ticket mithin durch zwei Achtergruppen numeriert wird, wobei eine höherwertige Achtergruppe ein Wortzeiger und eine niedrigwertige Achtergruppe ein Index ist.

6. Verfahren nach Anspruch 5,
**dadurch gekennzeichnet,**
daß für den Verkauf eines Tickets der Zeiger um eine Einheit erhöht wird, um auf das in dem Verkaufsmuster folgende Wort zu zeigen, ein Index auf Zufallsbasis erzeugt wird, um ein Bit eines Worts zu bezeichnen, und, wenn dieses Bit den Wert "1" hat, der erhaltene Index auf die Karte übertragen wird, während dann, wenn dieses Bit den Wert "0" hat, der Index um eine Einheit erhöht wird, bis ein Bit mit dem Wert "1" angetroffen wird, woraufhin der so erhaltene Index dann auf die Karte übertragen wird.

7. Verfahren nach einem der Ansprüche 1 bis 6,
**dadurch gekennzeichnet,**
daß man ein Kontrollmuster bildet, welches aus einer Anzahl (t) von Gruppen zu jeweils drei Bits besteht, wobei jede Gruppe mit einem Stellenwert (j) aufweist:
- ein erstes Bit, welches durch seinen Zustand "0" oder "1" angibt, ob die Zahl mit dem gleichen Stellenwert j des Satzes von einer Karte verwendet wurde oder nicht,
- ein zweites und ein drittes Bit, die eine Doppelstelle bilden, deren verschiedene Zustände angeben, ob die Zahl mit dem Stellenwert j verkauft wurde, zum Verkauf steht oder nicht verkauft werden wird.

8. Verfahren nach einem der vorhergehenden Ansprüche,
**dadurch gekennzeichnet,**
daß die dedizierte Kartei, die einen Block von Tickets in einer Verbrauchskarte verkörpert,
- in einer ersten Phase der reziproken Echtheitsprüfung zwischen der Verbrauchskarte und einer Betriebskarte in einen "Besetzt-Zustand" gebracht wird, und
- in einen "Frei-Zustand" zurückgestellt wird, nachdem die von der Betriebskarte angeforderte Anzahl von Tickets verbraucht ist.

9. Verfahren nach Anspruch 1,
**dadurch gekennzeichnet,**
daß die Zahlen der Tickets während der jeweiligen Übertragungen zwischen der Anfangs-Leitkarte und der Leitkarte, zwischen der Leitkarte und der Verbrauchskarte, zwischen der Verbrauchskarte und der Betriebskarte in verschlüsselter Form übertragen werden.

10. Verfahren nach Anspruch 1,
**dadurch gekennzeichnet,**
daß man für den Leistungserbringer eine Teil-Kontroll-Liste erstellt, in der die Zahlen angegeben sind, die niemals verkauft werden.

11. Verfahren nach Anspruch 10,
**dadurch gekennzeichnet,**
daß die Teil-Kontroll-Liste des Leistungserbringers in die Betriebskarte integriert ist.

12. Karte zum elektronischen Zahlen zur Durchführung des Verfahrens nach Anspruch 1, wobei diese als Verbrauchskarte bezeichnete Karte aufweist:
- eine Speicherkartei, die von einer als Leitkarte bezeichneten Karte Binärinformationen empfangen kann, die die als Wertmarken bezeichneten Zahlungsmittel bilden,
- Dialogmittel für den Dialog mit einer als Betriebskarte bezeichneten Karte, die sich bei einem Dienstleistungserbringer befindet,
- Mittel zum Belasten des Karteispeichers mit einer gewissen Anzahl von Wertmarken auf Anforderung seitens der Betriebskarte,
wobei diese Verbrauchskarte dadurch gekennzeichnet ist, daß der Karteispeicher in Form mehrerer Bit-Gruppen organisiert ist, von denen jede Bitgruppe eine Zahl codiert, welche die Zahl ist, die als als "Ticket" bezeichnete Wertmarke zugeordnet ist, der Karteispeicher mithin einen Block von Tickets enthält, wobei die Mittel zum Belasten des Karteispeichers mit einer gewissen Anzahl von Tickets in der Lage sind, der Betriebskarte die Zahlen der zu belastenden Tickets mitzuteilen.

13. Karte nach Anspruch 12,
**dadurch gekennzeichnet,**
daß jede Gruppe von Bits der Kartei einen Zeiger und einen Index aufweist, wobei jedes Ticket des Karteispeichers mithin durch zwei Gruppen von Bits numeriert wird.

14. Karte nach Anspruch 13,
**dadurch gekennzeichnet,**
daß der Zeiger und der Index jeweils eine Achtergruppe bilden, jedes Ticket des Karteispeichers folglich durch zwei Achtergruppen numeriert wird, wobei eine höherwertige Achtergruppe ein Wortzeiger und eine niedrigwertige Achtergruppe ein Index ist.

15. Karte nach Anspruch 12,
**dadurch gekennzeichnet,**
daß sie Mittel aufweist, um
- die Kartei in einer ersten Phase der reziproken Echtheitsprüfung zwischen der Verbrauchskarte und der Betriebskarte in einen "Besetzt-Zustand" zu versetzen, und
- die Kartei in einen "Frei-Zustand" zurückzustellen, nachdem die von der Betriebskarte angeforderte Anzahl von Tickets belastet wurde.

## Claims

1. Method of electronic payment by means of microprocessor cards, in which:
a) an issuing entity capable of issuing access titles assigns to cards means of payment called tokens, these tokens consisting of binary information written in a memory file of the card,
b) to remunerate a service operator for a service with such a card, the card is debited with a particular number of tokens to the credit of the service operator,
c) the service operator accounts for the tokens received and is thereby remunerated by the issuing entity,
this method being characterised in that:
A) an initial set of an amount (t) of consecutive numbers is formed in the issuing entity and some numbers selected virtually at random are removed from this set, thus leaving a set of numbers available for sale,
B) to assign tokens to a particular card:
- some numbers are selected virtually at random from the set of numbers available for sale,
- these numbers are assigned to the card as tokens, each token (called a "voucher") thus consisting of a group of bits coding the number assigned as a token,
- the numbers thus assigned are removed from the set of numbers available for sale,
C) to remunerate the service operator for a service by means of vouchers, the card reveals the numbers of these vouchers to him,
D) the service operator collates all the numbers which he has received from various cards and returns them to the issuing entity for payment of his services, the said entity checking the authenticity of the numbers thus returned.

2. Method according to Claim 1, characterised in that, to form the set of numbers available for sale:
- a sequence of bits all equal to 1 and of an amount (t) equal to the amount of consecutive numbers forming the initial set defined in the issuing entity is taken,
- some of these bits are selected virtually at random and changed to 0, thus leaving a grid of bits at 0 and at 1, called a distribution grid,
- each bit of this distribution grid designates by its rank (j) the number having the same rank in the initial set formed in the issuing entity, this number being considered as available for sale if the bit of the distribution grid is at 1 and unavailable for sale if this bit is at 0.

3. Method according to Claim 2, characterised in that sales grids are formed by the following operations:
- a sequence of an amount (t) of bits, all equal to 1, is taken,
- an amount (p) of bits at 1 are selected from the distribution grid,
- the (t-p) bits of the sequence of t bits, the ranks of which do not correspond to the ranks of the p bits at 1 thus selected from the distribution grid, are changed to 0, thereby leaving a sequence of p bits at 1 and of t-p bits at 0, forming a sales grid,
- the p bits selected from the distribution grid are changed to 0,
- the sale of vouchers to a card from such a sales grid involving selecting bits from the bits at 1 of the sales grid, the rank of these selected bits indicating the rank of the numbers to be taken from the set of numbers available for sale formed in the issuing entity, transmitting these numbers to the card and changing the corresponding bits in the sales grid to 0,
- all the sales grids thus formed consisting of sequences of disjoint bits, each number of the set therefore being capable of being sold only once.

4. Method according to either one of Claims 2 and 3, characterised in that the distribution grid and the sales grids are organised in an amount (Q) of words of an amount (R) of bits, each bit of these grids being located by a first group of bits, called a marker, marking one of the Q words and by a second group of bits, called an index, identifying one of the R bits in the marked word, a voucher thus being numbered by two groups of bits.

5. Method according to Claim 4, characterised in that the marker and the index are each octets, each voucher thus being numbered by two octets, namely a high-weight octet which is a word marker and a low-weight octet which is an index.

6. Method according to Claim 5, characterised in that, for the sale of a voucher, the marker is incremented by one unit in order to mark the next word in the sales grid, an index is produced at random to designate a bit of a word, and, if this bit is at 1, the index obtained is transmitted to the card and, if this bit is at 0, the index is incremented by one unit until a bit equal to 1 is found, the index obtained then being transmitted to the card.

7. Method according to any one of Claims 1 to 6, characterised in that a checking grid formed from an amount (t) of groups of 3 bits is produced, each group having a rank (j) comprising:
- a first bit indicating by its state 0 or 1 whether the number of the same rank j of the set has been used by a card or not,
- a second and a third bit forming a doublet, the various states of which indicate whether the number of rank j has been sold, is on sale or will not be sold.

8. Method according to any one of the preceding claims, characterised in that the dedicated file embodying a booklet of vouchers in a consumption card:
- is put into an "occupied state" during a first step of mutual authentication between this consumption card and an operating card, and
- is put back into a "free state" after the consumption of the number of vouchers required by the operating card.

9. Method according to Claim 1, characterised in that the numbers of the vouchers pass in scrambled form during the respective exchanges between the initial management card and the management card, between the management card and the consumption card and between the consumption card and the operating card.

10. Method according to Claim 1, characterised in that a partial checklist giving numbers which will never be sold is produced for the operator.

11. Method according to Claim 10, characterised in that the partial checklist for the operator is integrated in the operating card.

12. Electronic payment card for carrying out the method according to Claim 1, this card, called a consumption card, comprising:
- a memory file capable of receiving from a card, called a management card, binary information constituting means of payment called tokens,
- means of dialogue with a card, called an operating card, belonging to a service operator,
- means for debiting the memory file with a particular number of tokens at the request of the operating card,
this consumption card being characterised in that the memory file is organized in a plurality of groups of bits, each group of bits coding a number which is the number assigned as a token, this token being called a "voucher", the memory file thus comprising a book of vouchers, the means for debiting the memory file with a particular number of vouchers being capable of revealing to the operating card the numbers of the vouchers to be debited.

13. Card according to Claim 12, characterised in that each group of bits of the file comprises a marker and an index, each voucher of the memory file thus being numbered by two groups of bits.

14. Card according to Claim 13, characterised in that the marker and the index are each octets, each voucher of the memory file thus being numbered by two octets, namely a high-weight octet which is a word marker and a low-weight octet which is an index.

15. Card according to Claim 12, characterised in that it comprises means for:
- putting the file into an "occupied state" during a first step of mutual authentication between the consumption card and the operating card, and
- putting the file back into a "free state" after the debiting of the number of vouchers required by the operating card.
